# EUROPÄISCHE PATENTSCHRIFT

(11) **EP 0 582 585 B1**
(45) Veröffentlichungstag und Bekanntmachung des Hinweises auf die Patenterteilung: **25.01.1995**
(21) Anmeldenummer: 92907481.3
(22) Anmeldetag: 27.03.1992
(51) Int. Cl.: H02K 3/24, H02K 15/04

(54) **ELEKTRISCHER LEITER MIT EINER LÄNGSNUT UND SCHLITZEN SENKRECHT ZUR LÄNGSNUT**
ELECTRICAL CONDUCTORS WITH A LONGITUDINAL GROOVE AND SLOTS PERPENDICULAR THERETO
CONDUCTEUR ELECTRIQUE POURVU D'UNE RAINURE ET DE FENTES PERPENDICULAIRES A LADITE RAINURE

(30) Priorität: 29.04.1991 DE 4114003
(43) Veröffentlichungstag der Anmeldung: 16.02.1994
(73) Patentinhaber: SIEMENS AKTIENGESELLSCHAFT, 80333 München (DE)
(72) Erfinder: FRANKENHAUSER, Georg, D-4330 Mülheim a. d. Ruhr (DE); WEDEMANN, Erhard, D-4330 Mülheim a. d. Ruhr (DE)
(86) Internationale Anmeldenummer: DE9200252
(87) Internationale Veröffentlichungsnummer: WO9220140

(56) Entgegenhaltungen:
- DE-A- 1 438 335
- DE-B- 1 015 528
- DE-B- 1 242 744
- FR-A- 1 414 669
- US-A- 4 152 610

## Beschreibung

Die Erfindung betrifft einen elektrischen Leiter mit einer Längsrichtung und einer Stapeirichtung senkrecht zur Längsrichtung, der mit einer Mehrzahl gleichartiger Leiter unter Einfügung einer Isolierschicht jeweils zwischen zwei einander benachbarte Leiter in der Stapelrichtung stapelbar ist, der zwei im wesentlichen ebene und senkrecht zur Stapelrichtung ausgerichtete Hauptseiten aufweist und mit zumindest einer Vielzahl von Schlitzen versehen ist, die etwa in Längsrichtung hintereinander angeordnet sind und deren jeder etwa in Stapelrichtung durch den Leiter führt sowie in jeder Hauptseite eine Mündung hat.

Derartige elektrische Leiter finden vielfältige Anwendung in Wicklungen elektrischer Maschinen, insbesondere in Wicklungen von Turbogeneratoren, die zur Abführung der im Betrieb erzeugten Wärme mit einem Kühlgas, insbesondere Luft oder Wasserstoff, gekühlt werden. Elektrische Leiter der genannten Art, wie auch ihre Verwendung in Wicklungen elektrischer Maschinen, sind beschrieben in dem von H. Sequenz herausgegebenen Buch "Herstellung der Wicklungen elektrischer Maschinen", Springer Verlag, Wien und New York 1973, insb. in dem in diesem Buch enthaltenen Aufsatz "Läuferwicklungen für Turbogeneratoren" von D. Lambrecht (S. 169 ff.). Zur Auswahl des Werkstoffes für einen elektrischen Leiter der beschriebenen Art ist insbesondere auf den in dem zitierten Buch ebenfalls enthaltenen Aufsatz "Leiterwerkstoffe" von R. Knobloch (S. 1 ff.) zu verweisen. Ein Anwendungsbeispiel für einen solchen elektrischen Leiter geht aus der EP 0 160 887 B1 hervor.

Wie insbesondere in dem Aufsatz von D. Lambrecht näher ausgeführt, werden elektrische Leiter der beschriebenen Art üblicherweise in einer Stapelrichtung senkrecht zu den Längsrichtungen der elektrischen Leiter zur Bildung einer Wicklung für eine elektrische Maschine, ggf. unter Verwendung isolierender Zwischenschichten, übereinander gestapelt. Schlitze in einander benachbarten elektrischen Leitern und Isolier schichten werden dabei untereinander zur zumindest teilweisen Überlappung gebracht, so daß sie untereinander unter Bildung von durch die aufeinander gestapelten elektrischen Leiter führenden Kühlkanälen miteinander kommunizieren. Die Kühlkanäle sind dabei im wesentlichen parallel zu einer durch die untereinander parallelen Längsrichtungen und die Stapelrichtung definierten Ebene ausgerichtet. Beim Betrieb der Wicklung werden die Kühlkanäle von Kühlgas, insbesondere Luft oder Wasserstoff, durchflutet, was in den zitierten Dokumenten ausführlich erläutert ist.

Aus der DE-OS 1 242 744 geht ein elektrischer Leiter mit einer Längsrichtung und einer Stapelrichtung senkrecht zur Längsrichtung hervor, der mit einer Mehrzahl gleichartiger Leiter in der Stapelrichtung stapelbar ist, wobei zwischen jeweils zwei Leiter zumindest eine Isolierschicht einzufügen ist. Der Leiter ist von zwei im wesentlichen ebenen und senkrecht zur Stapelrichtung ausgerichteten Hauptseiten begrenzt und weist eine Vielzahl von Schlitzen auf, die etwa in Längsrichtung hintereinander angeordnet sind und deren jeder in Stapelrichtung durch den Leiter führt sowie in jeder Hauptseite eine scharfkantige Mündung hat. Jeder Schlitz hat an begrenzenden Kanten nutenförmige Einfräsungen, die beim Stapeln dieses Leiters mit anderen Leitern durch buchsenartige Paßstücke aus Isoliermaterial ausgefüllt werden.

Aus dem US-Patent 4,152,610 geht ein stapelbarer elektrischer Leiter hervor mit einer Vielzahl von Schlitzen, die in einer Stapelrichtung durch den Leiter führen, und mit einer parallel zu einer Längsrichtung des Leiters ausgerichteten Längsnut zur Bildung eines Kühlkanals.

Die DE-OS 1 438 335 beschreibt eine Stapelung von durch Isolierschichten gegeneinander isolierten elektrischen Leitern mit in Stapelrichtung ausgerichteten Schlitzen, wobei ein Schlitz eines Leiters mit einem Schlitz eines benachbarten Leiters durch einen winklig zur gemeinsamen Längsrichtung der Leiter ausgerichteten Kanal kommuniziert. Ein solcher Kanal kann in der Isolierung und/oder in einem der Leiter angebracht sein.

Bei der Herstellung der Schlitze in den elektrischen Leitern ist, wie u. a. in dem zitierten Aufsatz von D. Lambrecht ausführlich erläutert wird, besondere Sorgfalt und damit entsprechend bisheriger Praxis eine aufwendige Nachbearbeitung der gestanzten oder gefrästen Schlitze erforderlich, um zwischen zwei aufeinander liegenden elektrischen Leitern, zwischen denen sich lediglich eine dünne Isolierschicht befindet, unerwünschte elektrische Verbindungen in Form von Kurzschlüssen o. dgl. zu vermeiden. So müssen üblicherweise die Mündungen der Schlitze durch nachträgliches Aussenken, Prägen o. dgl. entgratet und abgerundet oder abgeschrägt werden, was als wichtiger Arbeitsgang trotz der damit verbundenen Aufwendungen, insbesondere der damit verbundenen Kosten, in Kauf genommen wird.

Mit der vorliegenden Erfindung soll ein elektrischer Leiter angegeben werden, der leicht und kostengünstig herstellbar ist und der aufwendige Nachbearbeitungen zur Beseitigung der Grate und weiterer Formung der Mündungen der Schlitze entbehrlich macht.

Die Aufgabe wird durch einen elektrischen Leiter gemäß dem Anspruch 1 gelöst.

In dem erfindungsgemäßen elektrischen Leiter sind die Mündungen aller Schlitze so scharfkantig belassen, wie sie mit üblichen Fertigungsmethoden nach Art des Stanzens oder Fräsens, allenfalls in Verbindung mit einfachen abtragenden Oberflächenbehandlungen nach Art des Sandstrahlens oder Bürstens, erreichbar sind. Verrunden oder Abschrägen der Mündungen durch Aussenken, Fräsen, Prägen o. dgl. ist nicht erforderlich. Die Isolation zwischen zwei benachbarten Leitern, zwischen denen lediglich eine (ggf. mehrteilige) Isolierschicht liegt, die mit den Schlitzen der Leiter korrespondierende Ausnehmungen oder ähnliches aufweist, ist gesichert durch eine in zumindest einem der Leiter befindliche Längsnut mit den erfindungsgemäßen Eigenschaften, durch die die Mündungen der Schlitze dieses Leiters von der Isolierschicht beabstandet sind. Ein für die Güte der Isolation, also die elektrische Spannungsfestigkeit, zwischen den beiden Leitern ausreichend hoher Kriechweg kann ohne aufwendige Nachbearbeitungen gewährleistet werden. Die Nuttiefe der erfindungs gemäßen Längsnut kann relativ klein gehalten werden; gemäß Weiterbildungen der Erfindung sind für übliche Anwendungen eine Nuttiefe von höchstens etwa 20 %, vorzugsweise höchstens etwa 10 %, der maximalen Dicke des Leiters, bzw eine Nuttiefe der Größenordnung von etwa einem Millimeter, namentlich zwischen 0,5 mm und 2 mm, insbesondere um 1 mm, ausreichend. Mithin erfordert die Erfindung keine wesentliche Verringerung des Querschnittes eines elektrischen Leiters für übliche Anwendungen.

Die maximale Nutbreite der erfindungsgemäßen Längsnut in der Hauptseite des Leiters kann so bemessen werden, daß unter Wahrung eines hinreichend hohen Kriechweges die Einbuße an Querschnitt zur Leitung des elektrischen Stromes besonders klein ist. Insbesondere kann im Rahmen üblicher Anwendungen die maximale Nutbreite so bemessen werden, daß die maximale Schlitzbreite jedes der Schlitze, denen die Längsnut zugeordnet ist, höchstens etwa 80 % der maximalen Nutbreite beträgt. In der Regel stellt eine maximale Nutbreite, die zwischen etwa 0,5 mm und etwa 2 mm, insb. um etwa 1 mm, größer als die maximale Schlitzbreite bemessen ist, eine bevorzugte Ausbildung der Erfindung dar.

Gemäß einer günstigen Weiterbildung der Erfindung ist bei dem erfindungsgemäßen elektrischen Leiter jeder Vielzahl von Schlitzen nur eine Längsnut, dies heißt insbesondere auf nur einer Hauptseite eine Längsnut, zugeordnet. Damit kann, bei weitgehender Wahrung aller Vorteile der Erfindung, die Querschnittseinbuße an dem elektrischen Leiter gering gehalten und die elektrische Belastbarkeit des elektrischen Leiters beträchtlich gesteigert werden.

Vorteilhaft ist es weiterhin, an dem erfindungsgemäßen elektrischen Leiter nur eine Vielzahl von Schlitzen, also nur eine Reihe von in Längsrichtung etwa hintereinanderliegenden Schlitzen, vorzusehen. Dies kommt insbesondere einer kostengünstigen Fertigung entgegen und wirkt sich auch günstig auf die Erzielung eines hohen Querschnitts bei gegebenen Anforderungen an die Kühlbarkeit durch Kühlgas, das durch die Schlitze strömt, aus. Ebenfalls vorteilhaft ist es, den erfindungsgemäßen elektrischen Leiter in der Weise flach auszuführen, daß ihm senkrecht zur Längsrichtung und senkrecht zur Stapelrichtung eine maximale Breite zukommt, die größer als die parallel zur Stapelrichtung zu messende maximale Dicke ist. Insbesondere hat sich ein Verhältnis von maximaler Breite zu maximaler Dicke zwischen 5 und 10 als vorteilhaft erwiesen.

Ein wesentlicher Vorteil der Erfindung ist, daß scharfkantige Konturen, evtl. mit geringfügigen Resten von Graten, an den Mündungen der Schlitze toleriert werden, was an elektrischen Leitern gemäß dem Stand der Technik schlechthin nicht möglich war. Nachbearbeitungen des elektrischen Leiters nach dem Einbringen der Schlitze müssen nicht unbedingt eine Verrundung jeder Mündung mit einem oberhalb eines bestimmten Grenzwertes liegenden Krümmungsradius liefern oder jedweden Grat vollständig beseitigen. Sinnvoll ist es allerdings, daß die maximale Grathöhe der evtl. verbliebenen Grate an den Schlitzen kleiner als die Nuttiefe der den Schlitzen zugeordneten Längsnut ist. Auf diese Weise können die an den Mündungen verbliebenen Grate benachbarte Leiter und/oder Isolierschichten keinesfalls be einträchtigen. Die maximale Grathöhe an einem erfindungsgemäßen elektrischen Leiter sollte kleiner als 0,5 mm, vorzugsweise kleiner als 0,3 mm, sein. Maximale Grathöhen dieser Größenordnung sind im übrigen problemlos durch einfache Nachbehandlung des elektrischen Leiters nach dem Einbringen der Schlitze, insb. durch Sandstrahlen, erreichbar.

Der erfindunasgemäße elektrische Leiter wird vorteilhafterweise hergestellt, indem zunächst die Längsnut in den Leiter eingebracht wird und anschließend die Schlitze eingestanzt werden. Die Einarbeitung der Längsnut erfolgt vorteilhafterweise durch Ziehen, Walzen oder Formpressen, insbesondere unmittelbar bei der Herstellung des Leiters aus einem entsprechenden Rohling.

Besonders günstig ist es, jeden Schlitz derart in den Leiter einzustanzen, daß der Leiter mittels eines Stanzwerkzeuges von dem Nutboden der Längsnut zu der diesem gegenüberliegenden Hauptseite durchstoßen wird. Auf diese Weise kann als Auflage für den zu stanzenden Leiter eine einfache ebene Platte oder dgl. verwendet werden. Es besteht keine Gefahr, daß sich der elektrische Leiter bei dem Stanzprozeß verbiegt.

Wie bereits erwähnt, wird vorteilhafterweise die Herstellung des erfindungsgemäßen Leiters mit einer abtragenden Oberflächenbehandlung, insb. einer Strahlbehandlung nach Art einer Sandstrahlbehandlung, abgeschlossen. Diese Oberflächenbehandlung beseitigt zuverlässig auf der Oberfläche lose haftende Partikel, entfernt eventuell vorhandene Grate und dgl. in dem für die Zwecke der Erfindung erforderlichen Umfang und ist dennoch besonders einfach und kostengünstig durchführbar.

Wie bereits ausgeführt, eignet sich der erfindungsgemäße elektrische Leiter besonders zur Herstellung einer Wicklung für eine dynamoelektrische Maschine, z. B. für einen Turbogenerator, wobei eine Mehrzahl gleichartiger Leiter mit einer Mehrzahl von Isolierschichten mit jeweils einer Vielzahl von Ausnehmungen abwechselnd in Stapelrichtung gestapelt wird, wobei jede Ausnehmung mit zumindest einem Schlitz in jedem der der Isolierschicht benachbarten Leiter kommuniziert und wobei an jeder Isolierschicht zumindest ein Leiter mit einer eine Längsnut aufweisenden Hauptseite anliegt. So kommen die Vorteile des erfindungsgemäßen Leiters in besonderem Maße zur Geltung.

Günstig ist es dabei, an jeder Isolierschicht nur einen Leiter mit einer eine Längsnut aufweisenden Hauptseite anzulegen. Diese Lösung ermöglicht die Verwendung von Leitern, die an nur einer Hauptseite mit zumindest einer Längsnut versehen und somit in besonderem Maße elektrisch belastbar sind.

Vorteilhaft ist es darüber hinaus, bei der Verwendung des erfindungsgemäßen elektrischen Leiters zur Herstellung einer Wicklung für eine dynamoelektrische Maschine jede Ausnehmung in jeder Isolierschicht im wesentlichen deckungsgleich mit zumindest einem Schlitz, mit dem sie kommuniziert, auszuführen. Auf diese Weise kann ein besonders großer Kriechweg erzielt werden, was der Erhöhung der elektrischen Belastbarkeit der Wicklung förderlich ist. Wicklungen, die unter Verwendung erfindungsgemäßer elektrischer Leiter hergestellt wurden, eignen sich im besonderen zur Verwendung als Rotorwicklungen in Turbogeneratoren, insb. in Turbogeneratoren mit Nennbelastbarkeiten bis zu etwa 300 MVA.

Die weitere Erläuterung der Erfindung erfolgt anhand der in der Zeichnung dargestellten Ausführungsbeispiele, welche zum Zwecke der Verdeutlichung der speziellen Vorteile der Erfindung teilweise schematisiert, nicht maßstäblich und/oder leicht verzerrt gezeichnet sind. Im einzelnen zeigen:
Fig. 1 eine Anordnung aus zwei erfindungsgemäßen elektrischen Leitern und einer Isolierschicht;
Fig. 2 ein Ausführungsbeispiel des erfindungsgemäßen Leiters;
Fig. 3 einen Querschnitt durch ein weiteres Ausführungsbeispiel der Erfindung;
Fig. 4 das Einstanzen eines Schlitzes in einen elektrischen Leiter;
Fig. 5 den elektrischen Leiter nach dem Einstanzen des Schlitzes.

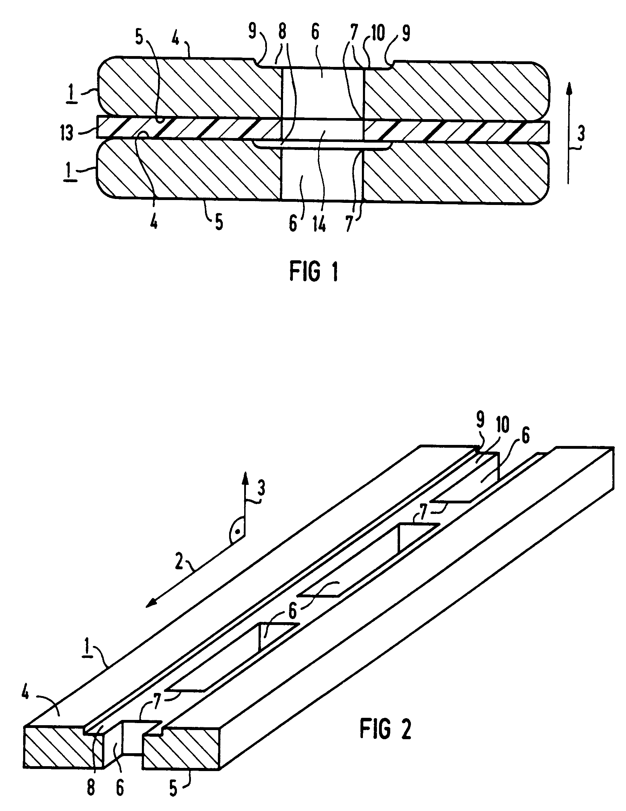

Fig. 1 zeigt zwei elektrische Leiter 1 gemäß der Erfindung, die unter Zwischenfügung einer Isolierschicht 13 entlang einer Stapelrichtung 3 gestapelt sind. Jeder Leiter 1 weist zwei senkrecht zur Stapelrichtung 3 ausgerichtete Hauptseiten 4 und 5 auf, wobei jeweils eine erste Hauptseite 4 mit einer flachen Längsnut 8 versehen und jeweils eine zweite Hauptseite 5 im wesentlichen glatt ist. Zur Durchleitung eines Kühlgases durch die elektrischen Leiter 1 und die Isolierschicht 13 weisen die Leiter 1 Schlitze 6 bzw die Isolierschicht 13 eine Ausnehmung 14 auf, wobei jeder Schlitz 6 in jeder Hauptseite 4,5 eine Mündung 7 hat.

Schlitze 6 und Ausnehmung 14 kommunizieren unter Bildung eines Kühlkanals, durch den in Stapelrichtung 3 ein gasförmiges Kühlmedium geblasen werden kann. Die Weiterbildung der in Fig. 1 gezeigten Anordnung zu einer elektrischen Wicklung für eine dynamoelektrische Maschine sowie der Einbau einer derartigen Wicklung in einen dem jeweiligen Zweck entsprechenden Wicklungsträger sind in dem zitierten Stand der Technik, insb. in dem erwähnten Aufsatz von Lambrecht, ausführlich beschrieben. Die erfindungsgemäße Längsnut 8 in dem elektrischen Leiter 1 weist zwei im wesentlichen parallel zur Stapelrichtung 3 orientierte Nutwände 9 und einen im wesentlichen senkrecht zur Stapelrichtung 3 ausgerichteten Nutboden 10 auf. Im konkreten Fall sind zwar die Nutwände 9 gerundet, was sich u. U. aus der gewählten Fertigungsart für den Leiter 1 von selbst ergibt, ihrer grundsätzlichen Ausrichtung zur Stapelrichtung 3 jedoch nicht entgegensteht. Die Breite der Längsnut 8 zwischen den Nutwänden 9 ist so bemessen, daß jede in der ersten Hauptseite 4 befindliche Mündung 7 vollständig in dem Nutboden 10 liegt. Dies gestattet es, den für einen elektrischen Kriechstrom zwischen zwei einander benachbarten Leitern 1 zur Verfügung stehenden Kriechweg zu vergrößern, denn, wie auch aus Fig. 1 ersichtlich, ein Kriechstrom muß nicht nur eine Strecke parallel zur Stapelrichtung 3 durch die Ausnehmung 14 in der Isolierschicht 13 nehmen, sondern zusätzlich noch Wege senkrecht zur Stapelrichtung 3. Der Verlängerung des Kriechweges kommt aus diesem Grunde auch entgegen, daß die Ausnehmung 14 in der Isolierschicht 13 im wesentlichen kongruent zu einem Schlitz 6 in einem benachbarten Leiter 1 ausgeführt ist. Leiter 1 und Isolierschicht 13 sind so angeordnet, daß an jeder Isolierschicht 13 nur ein elektrischer Leiter 1 mit einer eine Längsnut 8 aufweisenden Hauptseite 4 anliegt. Es hat sich erwiesen, daß die auf diese Weise erzielbaren Kriechwege hinreichend hoch sind; eine Längsnut 8 an nur einer Hauptseite 4 jedes Leiters 1 gewährleistet jedoch einen besonders hohen Querschnitt zur Leitung eines elektrischen Stromes, was unter dem Aspekt der durch den elektrischen Strom verursachten Wärmebelastung vorteilhaft ist.

Fig. 2 zeigt eine Schrägansicht auf einen Leiter 1 gemäß der Erfindung. Der Leiter 1 ist gestreckt entlang einer Längsrichtung 2 und weist eine Vielzahl von Schlitzen 6 auf, die parallel zu einer Stapelrichtung 3 durch den Leiter 1 hindurchführen und deren jeder in jeder Hauptseite 4,5 eine Mündung 7 hat. Die erste Hauptseite 4 des Leiters 1 enthält die erfindungsgemäße flache Längsnut 8. Die Längsnut 8 erstreckt sich im wesentlichen über die gesamte Länge des Leiters 1 und kann daher bereits unmittelbar bei der Herstellung des Leiters 1 in diesen eingebracht werden. Im dargestellten Beispiel sind die Nutwände 9 im wesentlichen parallel zur Stapelrichtung 3, und der Nutboden 10 ist orthogonal zu den Nutwänden 9. Wie bereits ausgeführt, ist die konkrete Gestaltung der Längsnut 8 den jeweiligen fertigungstechnischen Möglichkeiten entsprechend anpaßbar. Wesentlich ist nur, daß die Längsnut 8 zwischen Hauptseite 4 und Nutboden 10 eine für den Zweck der Kriechwegverlängerung sowie zur Aufnahme evtl. verbliebener Grate an den Mündungen 7 ausreichende Nuttiefe aufweist. Wie bereits erwähnt, sollte die Nuttiefe auf ein hinreichend kleines Maß beschränkt sein, damit der Querschnitt des Leiters 1 nicht übermäßig verringert ist.

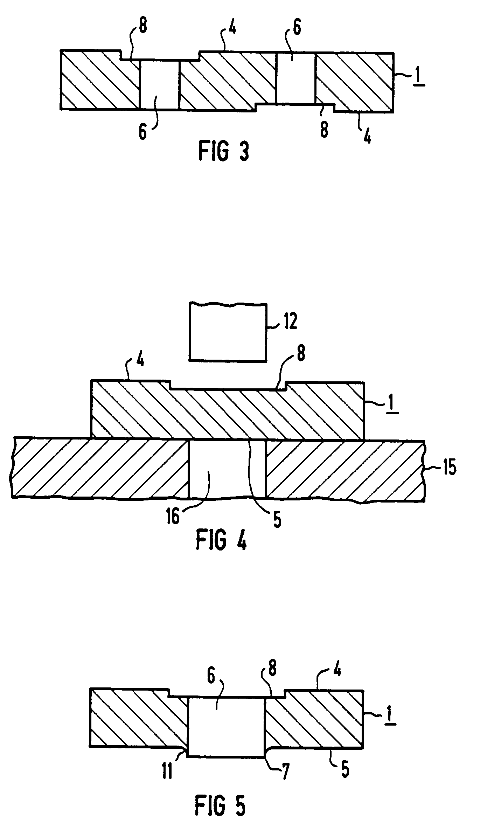

Fig. 3 zeigt ein Ausführungsbeispiel des erfindungsgemäßen Leiters 1, bei dem zwei Reihen von in Längsrichtung (nicht dargestellt) hintereinander angeordneten Schlitzen 6 vorgesehen sind. Jeder Reihe von Schlitzen 6 ist eine Längsnut 8 zugeordnet, so daß der elektrische Leiter 1 zwei Längsnuten 8 aufweist. Diese Längsnuten 8 sind im dargestellten Beispiel auf beide Hauptseiten 4 verteilt.

Fig. 4 zeigt, wie ein Leiter 1 zur Bildung eines Schlitzes gestanzt werden kann. Hierzu wird der Leiter 1 auf eine Auflage 15 aufgelegt, die für die ausgestanzten Stücke sowie für das Stanzwerkzeug 12 eine entsprechende Ausnehmung 16 aufweist. Der Stanzprozeß erfolgt in der Weise, daß der Leiter 1 von der die Längsnut 8 aufweisenden Hauptseite 4 zu der dieser gegenüberliegenden, auf der Auflage 15 aufliegenden und im wesentlichen glatten Hauptseite 5 durchstoßen wird. Die in Fig. 4 dargestellte Art des Einstanzens ist deswegen besonders vorteilhaft, weil ein Durchbiegen des elektrischen Leiters 1 in Stapelrichtung 3 (in Fig. 4 nicht dargestellt) ausgeschlossen ist. Wird der Leiter 1 von der glatten Hauptseite 5 zur Längsnut 8 durchstoßen, so muß eventuell ein Durchbiegen durch eine speziell angepaßte Auflage 15 oder andere Maßnahmen verhindert werden.

Fig. 5 zeigt das Produkt des in Fig. 4 dargestellten Stanzprozesses. Der Leiter 1 weist einen von der Längsnut 8 zur glatten Hauptseite 5 durchgehenden Schlitz 6 auf, an dessen in der glatten Hauptseite 5 gelegenen Mündung 7 ein Grat 11, verursacht durch den Stanzprozeß und in Fig. 5 übertrieben dargestellt, hervorsteht. Wie bereits ausgeführt, kann ein solcher Grat 11 durch einfache Nachbehandlung des Leiters 1, wie z. B. Sandstrahlen, weitestgehend entfernt werden. Ein evtl. verbleibender geringfügiger Rest des Grates 11 ist im Rahmen der Erfindung nicht bedenklich, sofern nicht der konkrete Anwendungsfall im Hinblick auf eine benötigte besonders hohe Spannungsfestigkeit anderes erfordert. Wird der dargestellte elektrische Leiter 1 mit einem weiteren Leiter 1 (evtl. unter Zwischenfügung einer Isolierschicht) zur Bildung einer Wicklung gestapelt, so ragt ein evtl. verbliebener Grat 11 (bzw. die von diesem leicht verformte Isolierschicht) in die Längsnut 8 des benachbarten Leiters 1 hinein; die Stapelbarkeit des Leiters 1 ist dadurch nicht beeinträchtigt.

## Patentansprüche

1. Elektrischer Leiter (1) mit einer Längsrichtung (2) und einer Stapelrichtung (3) senkrecht zur Längsrichtung (2), der
a) mit einer Mehrzahl gleichartiger Leiter (1) in der Stapelrichtung (3) stapelbar ist, wobei zwischen jeweils zwei Leiter (1) zumindest eine Isolierschicht (13) einzufügen ist;
b) von zwei im wesentlichen ebenen und senkrecht zur Stapelrichtung (3) ausgerichteten Hauptseiten (4, 5) begrenzt ist und in Stapelrichtung (3) eine maximale Dicke hat;
c) zumindest eine Vielzahl von Schlitzen (6) aufweist, die etwa in Längsrichtung (2) hintereinander angeordnet sind und deren jeder etwa in Stapelrichtung (3) durch den Leiter (1) führt sowie in jeder Hauptseite (4, 5) eine scharfkantige Mündung (7) hat,
**dadurch gekennzeichnet,** daß zur Vermeidung von Kurzschlüssen durch scharfkantige Konturen, eventuell mit Resten von Graten, an den Mündungen (7) auf zumindest einer Hauptseite (4) eine der Vielzahl von Schlitzen (6) zugeordnete, etwa parallel zur Längsrichtung (2) ausgerichtete Längsnut (8) mit zwei etwa parallel zur Stapelrichtung (3) liegenden Nutwänden (9) und einem etwa senkrecht zur Stapelrichtung (3) liegenden Nutboden (10) sowie einer in Stapelrichtung (3) zu messenden Nuttiefe, die klein gegenüber der maximalen Dicke ist liegt, wobei die in dieser Hauptseite (4) befindliche Mündung (7) jedes Schlitzes (6) beabstandet von jeder Nutwand (9) in dem Nutboden (10) liegt.

2. Elektrischer Leiter (1) nach Anspruch 1, bei dem die Nuttiefe höchstens etwa 20 %, insbesondere höchstens etwa 10 %, der maximalen Dicke beträgt.

3. Elektrischer Leiter (1) nach Anspruch 1 oder 2, bei dem die Nuttiefe zwischen 0,5 mm und 2 mm beträgt.

4. Elektrischer Leiter (1) nach Anspruch 3, bei dem die Nuttiefe etwa 1 mm beträgt.

5. Elektrischer Leiter (1) nach einem der vorhergehenden Ansprüche, bei dem
a) senkrecht zur Längsrichtung (2) und senkrecht zur Stapelrichtung (3) jeder Schlitz (6) eine maximale Schlitzbreite und jede Längsnut (8) eine maximale Nutbreite hat;
b) die maximale Schlitzbreite höchstens etwa 80 % der maximalen Nutbreite beträgt.

6. Elektrischer Leiter (1) nach einem der vorhergehenden Ansprüche, bei dem
a) senkrecht zur Längsrichtung (2) und senkrecht zur Stapelrichtung (3) jeder Schlitz (6) eine maximale Schlitzbreite und jede Längsnut (8) eine maximale Nutbreite hat;
b) die maximale Nutbreite zwischen 0,5 mm und 2 mm, insbesondere etwa 1 mm, größer als die maximale Schlitzbreite ist.

7. Elektrischer Leiter (1) nach einem der vorhergehenden Ansprüche, bei dem jeder Vielzahl von Schlitzen (6) nur eine Längsnut (8) zugeordnet ist.

8. Elektrischer Leiter (1) nach einem der vorhergehenden Ansprüche, der nur eine Vielzahl von Schlitzen (6) aufweist.

9. Elektrischer Leiter (1) nach einem der vorhergehenden Ansprüche, der senkrecht zur Längsrichtung (2) und senkrecht zur Stapelrichtung (3) eine maximale Breite hat, die größer als die maximale Dicke ist.

10. Verfahren zur Herstellung eines elektrischen Leiters (1) nach einem der vorhergehenden Ansprüche, wobei zunächst die Längsnut (8) in den Leiter (1) eingebracht wird und anschließend die Schlitze (6) in den Leiter (1) eingestanzt werden.

11. Verfahren nach Anspruch 10, bei dem jeder Schlitz (6) derart eingestanzt wird, daß der Leiter (1) mittels eines Stanzwerkzeuges (12) von dem Nutboden (10) zu der diesem gegenüberliegenden Hauptseite (5) durchstoßen wird.

12. Verfahren nach Anspruch 10 oder 11, bei dem die Längsnut (8) durch Ziehen, Walzen oder Formpressen des elektrischen Leiters (1) hergestellt wird.

13. Verfahren nach einem der Ansprüche 10 bis 12, bei dem der Leiter (1) nach dem Einstanzen der Schlitze (6) einer abtrasenden Oberflächenbehandlung unterzogen wird.

14. Verfahren nach Anspruch 13, wobei die Oberflächenbehandlung eine Strahlbehandlung, insbesondere eine Sandstrahlbehandlung, ist.

15. Verwendung eines elektrischen Leiters (1) nach einem der Ansprüche 1 bis 9 zur Herstellung einer Wicklung für eine dynamoelektrische Maschine, wobei
a) der Leiter (1) mit einer Mehrzahl gleichartiger Leiter (1) sowie einer Mehrzahl von Isolierschichten (13), deren jede eine Vielzahl von Ausnehmungen (14) hat, in Stapelrichtung (3) gestapelt wird;
b) zwischen jeweils zwei Leiter (1) eine Isolierschicht (13) eingefügt wird, wobei jeweils eine Ausnehmung (14) in jeder Isolierschicht (13) mit jeweils einem Schlitz (6) in einem der Leiter (1) kommuniziert;
c) an jeder Isolierschicht (13) zumindest ein Leiter (1) mit einer Hauptseite (4) anliegt, die eine Längsnut (8) aufweist.

16. Verwendung nach Anspruch 15, wobei an jeder Isolierschicht (13) nur ein Leiter (1) mit einer eine Längsnut (8) aufweisenden Hauptseite (4) angelegt wird.

17. Verwendung nach Anspruch 15 oder 16, wobei jede Ausnehmung (14) in jeder Isolierschicht (13) im wesentlichen deckungsgleich mit zumindest einem Schlitz (6), mit dem sie kommuniziert, ist.

## Claims

1. Electrical conductor (1) having a longitudinal direction (2) and a stacking direction (3) perpendicular to the longitudinal direction (2) which
a) is stackable in the stacking direction (3) with a plurality of identical conductors (1), wherein at least one insulating layer (13) is intended to be interposed between each two conductors (1);
b) is delimited by two substantially flat main sides (4, 5), which are aligned perpendicular to the stacking direction (3), and has a maximum thickness in the stacking direction (3);
c) has at least one multiplicity of slots (6) which are arranged, one after another, approximately in the longitudinal direction (2), and each slot (6) leads through the conductors (1), approximately in the stacking direction (3), and has a sharp-edged opening (7) in each main side (4, 5),
characterised in that, in order to prevent short-circuits due to sharp-edged contours, possibly with residues of burrs, a longitudinal groove (8) lies at the openings (7) on at least one main side (4), the longitudinal groove (8) being allocated to the multiplicity of slots (6), aligned approximately parallel to the longitudinal direction (2), and having two groove walls (9) lying approximately parallel to the stacking direction (3), a groove bottom (10) lying approximately perpendicular to the stacking direction (3) and a groove depth, to be measured in the stacking direction (3), which is small in relation to the maximum thickness, wherein the opening (7) of each slot (6) located in this main side (4) lies at a distance from each groove wall (9) in the groove bottom (10).

2. Electrical conductor (1) according to claim 1, in which the groove depth is at most approximately 20%, particularly at most approximately 10%, of the maximum thickness.

3. Electrical conductor (1) according to claim 1 or 2, in which the groove depth is between 0.5 mm and 2 mm.

4. Electrical conductor (1) according to claim 3, in which the groove depth is approximately 1 mm.

5. Electrical conductor (1) according to one of the preceding claims, in which
a) each slot (6) has a maximum width and each longitudinal groove (8) has a maximum width perpendicular to the longitudinal direction (2) and perpendicular to the stacking direction (3);
b) the maximum slot width is at most approximately 80% of the maximum groove width.

6. Electrical conductor (1) according to one of the preceding claims, in which
a) each slot (6) has a maximum width and each longitudinal groove (8) has a maximum width perpendicular to the longitudinal direction (2) and perpendicular to the stacking direction (3);
b) the maximum groove width is between 0.5 mm and 2 mm, particularly approximately 1 mm, greater than the maximum slot width.

7. Electrical conductor (1) according to one of the preceding claims, in which only one longitudinal groove (8) is allocated to each multiplicity of slots (6).

8. Electrical conductor (1) according to one of the preceding claims, which has only one multiplicity of slots (6).

9. Electrical conductor (1) according to one of the preceding claims, which has a maximum width, that is greater than the maximum thickness, perpendicular to the longitudinal direction (2) and perpendicular to the stacking direction (3).

10. Method of producing an electrical conductor (1) according to one of the preceding claims, wherein first the longitudinal groove (8) is produced in the conductor (1) and then the slot (6) is stamped into the conductor (1).

11. Method according to claim 10 in which each slot (6) is stamped such that the conductor (1) is pierced by means of a stamping tool (12) from the groove bottom (10) to the opposite main side (5).

12. Method according to claim 10 or 11, in which the longitudinal groove (8) is produced by drawing, rolling or compression moulding the electrical conductor (1).

13. Method according to one of claims 10 to 12, in which the conductor (1) is subjected to a material-removing surface treatment after the slots (6) have been stamped.

14. Method according to claim 13, wherein the surface treatment is a blasting treatment, particularly a sand blasting treatment.

15. Use of an electrical conductor (1) according to one of claims 1 to 9 for producing a winding for a dynamo-electric machine, wherein
a) the conductor (1) is stacked in the stacking direction (3) with a plurality of identical conductors (1) and a plurality of insulating layers (13), each of the insulating layers (13) having a multiplicity of recesses (14);
b) an insulating layer (13) is interposed between every two conductors (1), wherein each recess (14) in each insulating layer (13) communicates with a slot (6) in one of the conductors (1);
c) at least one conductor (1), with a main side (4) having a longitudinal groove (8), rests on each insulating layer (13).

16. Use according to claim 15, wherein only one conductor (1), with a main side (4) having a longitudinal groove (8), rests on each insulating layer (13).

17. Use according to claim 15 or 16, wherein each recess (14) in each insulating layer (13) is substantially coincident with at least one slot (6), with which it communicates.

## Revendications

1. Conducteur électrique (1) possédant une direction longitudinale (2) et une direction d'empilage (3) perpendiculaire à la direction longitudinale (2), et qui
a) peut être empilé avec une multiplicité de conducteurs identiques (1) dans la direction d'empilage (3), au moins une couche isolante (13) devant être insérée entre respectivement deux conducteurs (1),
b) est limité par deux côtés principaux (4,5) sensiblement plans et perpendiculaires à la direction d'empilage (3) et possède une épaisseur maximale dans la direction d'empilage (3),
c) comporte au moins une multiplicité de fentes (6), qui sont disposées les unes derrière les autres par exemple approximativement dans la direction longitudinale (2) et dont chacune s'étend à travers le conducteur (1) approximativement dans la direction d'empilage (3) et possède, dans chaque côté principal (4,5), une embouchure à arêtes vives (7),
caractérisé par le fait que pour éviter des courts-circuits produits par des contours à arêtes vives, comprenant éventuellement des restes de bavures, au niveau des embouchures (7), et sur au moins un côté principal (4), est disposée une rainure longitudinale (8), qui est associée à la multiplicité de fentes (6), s'étend approximativement parallèlement à la direction longitudinale (2) et comporte deux parois (9) qui sont approximativement parallèles à la direction d'empilage (3), et un fond (10) approximativement perpendiculaire à la direction d'empilage (3) et une profondeur de rainure, mesurée dans la direction d'empilage (3), qui est inférieure à l'épaisseur maximale, l'embouchure (7), située dans ce côté principal (4), de chaque fente (6) étant située, à distance de chaque paroi (9) de la rainure, dans le fond (10) de cette dernière.

2. Conducteur électrique (1) suivant la revendication 1, dans lequel la profondeur de rainure est égale au maximum à environ 20 % et notamment au maximum à environ 10 % de l'épaisseur maximale.

3. Conducteur électrique (1) suivant la revendication 1 ou 2, dans lequel la profondeur de rainure est comprise entre 0,5 mm et 2 mm.

4. Conducteur électrique (1) suivant la revendication 3, dans lequel la profondeur de rainure est égale à environ 1 mm.

5. Conducteur électrique (1) suivant l'une des revendications précédentes, dans lequel
a) chaque fente (6) possède une largeur maximale et chaque rainure longitudinale (8) possède une largeur maximale perpendiculairement à la direction longitudinale (2) et perpendiculairement à la direction d'empilage (3);
b) la largeur maximale des fentes est égale au maximum à environ 80 % de la largeur maximale de la rainure.

6. Conducteur électrique (1) suivant l'une des revendications précédentes, dans lequel
a) chaque fente (6) possède une largeur maximale et chaque rainure longitudinale (8) possède une largeur maximale, perpendiculairement à la direction longitudinale (2) et perpendiculairement à la direction d'empilage (3);
b) la largeur maximale de la rainure est supérieure, d'une valeur comprise entre 0,5 mm et 2 mm et égale notamment approximativement à 1 mm, à la largeur maximale de la fente.

7. Conducteur électrique (1) suivant l'une des revendications précédentes, dans lequel seule une rainure longitudinale (8) est associée à chaque ensemble de fentes (6).

8. Conducteur électrique (1) suivant l'une des revendications précédentes, qui possède un seul ensemble de fentes (6).

9. Conducteur électrique (1) suivant l'une des revendications précédentes, qui possède une largeur maximale, qui est supérieure à l'épaisseur maximale, perpendiculairement à la direction lnogitudinale (2) et perpendiculairement à la direction d'empilage (3).

10. Procédé pour fabriquer un conducteur électrique (1) suivant l'une des revendications précédentes, selon lequel on aménage tout d'abord la fente longitudinale (8) dans le conducteur (1) et on découpe ensuite les fentes (6) dans le conducteur (1).

11. Procédé suivant la revendication 10, selon lequel on découpe chaque fente (6) de manière que le conducteur (1) soit traversé au moyen d'un outil de découpage (12), depuis le fond (10) de la rainure jusqu'au côté principal opposé (5).

12. Procédé suivant la revendication 10 ou 11, selon lequel on forme la rainure longitudinale (8) par emboutissage, laminage ou par moulage par compression du conducteur électrique (1).

13. Procédé suivant l'une des revendications 10 à 12, selon lequel, après découpage des fentes (6), on soumet le conducteur (1) à un traitement de surface avec enlèvement de matière.

14. Procédé suivant la revendication 13, selon lequel le traitement de surface est un traitement avec projection, notamment un traitement de sablage.

15. Utilisation d'un conducteur électrique (1) selon l'une des revendications 1 à 9 pour fabriquer un enroulement pour une machine dynamo-électrique, dans laquelle
a) on empile, dans la direction d'empilage (3), le conducteur (1) avec une multiplicité de conducteurs (1) identiques ainsi qu'avec une multiplicité de couches isolantes (13), dont chacune possède une multiplicité d'ouvertures (14);
b) on insère une couche isolante (13) entre respectivement deux conducteurs (1), auquel cas respectivement une ouverture (14) ménagée dans chaque couche isolante (13) communique avec respectivement une fente (6) ménagée dans l'un des conducteurs (1);
c) au moins un conducteur (1) s'applique sur chaque couche isolante (13), par un côté principal (4) qui possède une rainure longitudinale (8).

16. Utilisation selon la revendication 15, dans laquelle seul un conducteur (1) possédant un côté principal (4) possédant une rainure longitudinale (8), est appliqué contre chaque couche isolante (13).

17. Utilisation suivant la revendication 15 ou 16, dans laquelle chaque ouverture (14) ménagée dans chaque couche isolante (13) est sensiblement en recouvrement coïncidant avec au moins une fente (6), avec laquelle elle communique.
